# EUROPEAN PATENT APPLICATION

(11) **EP 2 608 564 A1**
(43) Date of publication of application: **26.06.2013**
(21) Application number: 12196881.2
(22) Date of filing: 13.12.2012
(51) Int. Cl.: H04N 21/472, H04N 21/436, H04N 21/462, H04N 21/442

(54) **Client device connectable to server and control method thereof**

(30) Priority: 21.12.2011 KR 20110139350
(71) Applicant: Samsung Electronics Co., Ltd., Gyeonggi-do 443-742 (KR)
(72) Inventor: Pyo, Sung-jae, Seongnam-si (KR)
(74) Representative: Waddington, Richard

(57) **Abstract**

A client device connectable to a server and a control method thereof are provided. The client device includes: a communication unit connectable to at least one of a plurality of servers providing contents; an output unit outputting the contents provided from the servers; an input reception unit receiving input from a user; and a controller displaying a list of the servers arranged in an order of priority, selecting any one of the servers according to the input by the user, and performing control to receive the contents from the selected server.

## Description

### BACKGROUND

### 1. Field

Apparatuses and methods consistent with exemplary embodiments relate to a client device connectable to a server and a control method thereof, and more particularly to a client device connected to any one of a plurality of servers, and a control method thereof.

### 2. Description of the Related Art

A plurality of devices such as a set-top box for a television (TV) may be provided depending on environment for use, as where a plurality of rooms each has a TV. In this case, the devices may be divided into a single main device which functions to provide contents and a plurality of secondary devices which are connected to the main device and transmit contents to TVs according to user's manipulation. The main device and the secondary devices are connected to each other via a network and serve as a server and as clients, respectively. Hereinafter, the main device is referred to as a server, and the secondary device is referred to as a client device.

When a plurality of servers are provided, a client device needs to select one of the servers to be connected to the server. However, in this case, it is difficult to select any one of the servers based on the user's convenience or preference.

### SUMMARY

Exemplary embodiments address at least the above problems and/or disadvantages and other disadvantages not described above. Also, an exemplary embodiment is not required to overcome the disadvantages described above, and an exemplary embodiment may not overcome any of the problems described above.

One or more exemplary embodiments provide a client device to be connected to any one of a plurality of servers in consideration of user's convenience, and a control method thereof.

According to the present invention there is provided an apparatus and method as set forth in the appended claims. Other features of the invention will be apparent from the dependent claims, and the description which follows.

According to an aspect of an exemplary embodiment, there is provided a client device connectable to a server, the client device including: a communication unit connectable to at least one of a plurality of servers providing contents; an output unit outputting the contents provided from the servers; an input reception unit receiving input by a user; and a controller displaying a list of the servers arranged in preset order of priority, selecting any one of the servers according to the input by the user, and performing control to receive the contents from the selected server.

The controller may determine the order of priority based on whether the servers are recently connected.

The controller may determine the order of priority based on connection frequency of the servers.

The controller may determine the order of priority based on whether the servers are in the same network.

The controller may determine the order of priority based on order of whether the servers are recently connected, connection frequency of the servers, and whether the servers are in the same network

The controller may determine the order of priority based on at least one of quality of the contents preset by the user, resolution, and a kind of a medium providing the contents.

The controller may select a server which is a top priority among the servers when there is no input by the user within a predetermined period of time after displaying the list.

The controller may transmit information about the order of priority to the servers.

The controller may receive information about order of priority of another client from any one of the servers, and display the list based on the received information about the order of priority in reconnection.

According to an aspect of another exemplary embodiment, there is provided a control method of a client device connectable to a server, the method including: displaying a list of a plurality of servers providing contents arranged in preset order of priority; selecting any one of the servers according to input by a user; connecting to the selected server and receiving the contents from the server; and outputting the contents received from the server.

The displaying may include determining the order of priority based on whether the servers are recently connected.

The displaying may include determining the order of priority based on connection frequency of the servers.

The displaying may include determining the order of priority based on whether the servers are in the same network.

The displaying may include determining the order of priority based on order of whether the servers are recently connected, connection frequency of the servers, and whether the servers are in the same network.

The determining may include determining the order of priority based on at least one of quality of the contents preset by the user, resolution, and a kind of a medium providing the contents.

The selecting may include selecting a server which is a top priority among the servers when there is no input by the user within a predetermined period of time after displaying the list.

The control method may further include transmitting information about the order of priority to the servers.

The control method may further include receiving information about order of priority of another client from any one of the servers, wherein the displaying may include displaying the list based on the received information about the order of priority in reconnection.

### BRIEF DESCRIPTION OF THE DRAWINGS

The above and/or other aspects will become more apparent and more readily appreciated by describing certain exemplary embodiments, with reference to the accompanying drawings, in which:
FIG. 1 is a block diagram illustrating a client device and a server according to an exemplary embodiment;
FIG. 2 is a block diagram illustrating a configuration of the client device;
FIG. 3 is a flowchart illustrating a control method of the client device;
FIG. 4 shows an illustrative list of a plurality of servers arranged in order of priority;
FIG. 5 is a flowchart showing an illustrative operation of the client device;
FIG. 6 shows an illustrative example of a user interface (UI);
FIG. 7 illustrates a client device and a server according to an exemplary embodiment; and
FIG. 8 shows an illustrative example of a UI for sharing information.

### DETAILED DESCRIPTION OF EXEMPLARY EMBODIMENTS

Certain exemplary embodiments are described in detail below with reference to the accompanying drawings.

The exemplary embodiments may be embodied in various forms without being limited to exemplary embodiments set forth herein. Descriptions of well-known functions or constructions are omitted for clarity and conciseness, and the same drawing reference numerals are used for the same elements even in different drawings. The matters defined in the description, such as detailed construction and elements, are provided to assist in a comprehensive understanding of the exemplary embodiments. However, exemplary embodiments can be carried out without those specifically defined matters. The term "unit" as used herein means a hardware component, such as a processor or circuit, and/or a software component that is executed by a hardware component such as a processor.

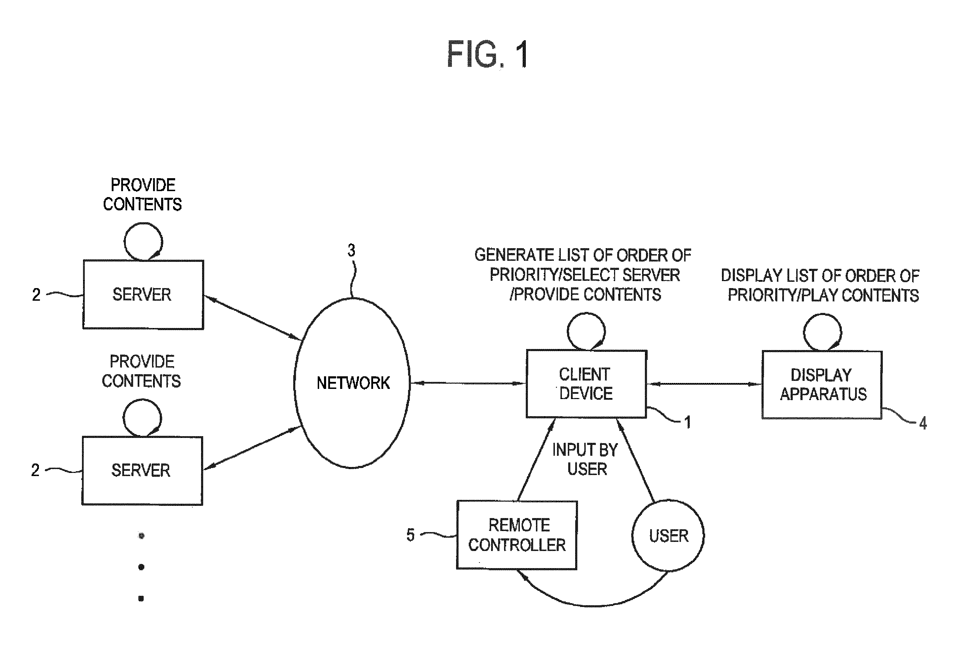

FIG. 1 is a block diagram illustrating a client device and at least one server according to an exemplary embodiment. The client device 1 may be a set-top box of a display apparatus 4 such as a TV. The client device 1 is connected to one of the servers 2 via a network 3. The server 2 may be a set-top box having a function of receiving broadcast signals and transmits image contents and/or audio contents (hereinafter, collectively referred to as "contents") included in a received broadcast signal to the client device 1. Alternatively, the server 2 may also include any device which is capable of providing contents, e.g., a digital video disc (DVD) player, a Blu-ray disc (BD) player, a personal video recorder (PVR), a personal computer (PC) and a smart pad.

The client device 1 receives contents from the server 2 and transmits the received contents to the display apparatus 4. The client device 1 may receive input by a user through a remote controller 5 or an input unit (not shown) provided on the client device 1. The client device 1 allows corresponding contents to be transmitted to the display apparatus 4 according to the received input by the user.

The client device 1 is connected to any one of a plurality of servers 2 to receive contents. The client device 1 selects any one of the servers 2 in consideration of user's convenience and is connected to the selected server 2. For example, the client device 1 selects any one of the servers 2 according to order of priority. The client device 1 provides information on order of priority of the servers 2 to the user through the display apparatus 4. The user may choose any one of the servers 2 based on the information about the order of priority. The client device 1 is connected to the server 2 chosen by the user and transmits the contents to the display apparatus 4. Accordingly, the user may readily and conveniently use the contents of the desired server 2, which is selected, for example, based on the information about the order of priority of the servers 2 provided by the client device 1.

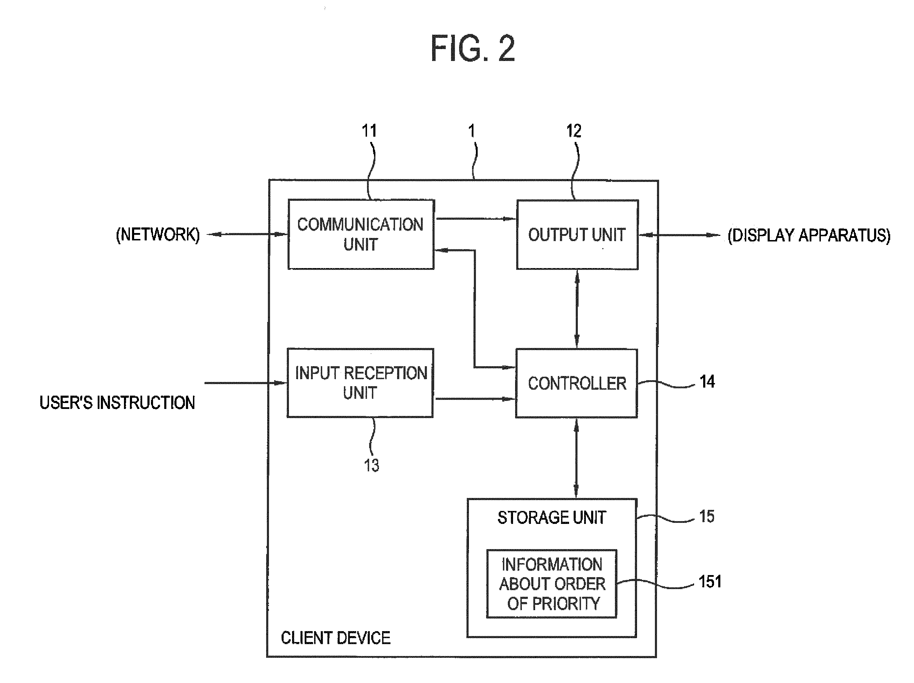

FIG. 2 is a block diagram illustrating a configuration of the client device 1. As shown in FIG. 2, the client device 1 may include a communication unit 11, an output unit 12, an input reception unit 13 and a controller 14. The communication unit 11 performs communication with the server 2 through the network 3. The communication unit 11 may perform communication according to any method, without being particularly limited, for example, according to digital living network alliance (DLNA) or universal plug and play (UPnP).

The output unit 12 outputs contents received through the communication unit 11 to the display apparatus 4. The output unit 12 may output contents according to any method, without being particularly limited.

The input reception unit 13 receives input by a user. The input reception unit 13 may receive a remote control signal including user's input from the remote controller 5. Alternatively, the input reception unit 13 may receive input by a user through a manipulation panel (not shown) provided on the client device 1.

The controller 14 provides information about order of priority of the servers 2 to a user. The controller 14 may display a list of the servers 2 arranged according to preset order of priority. The controller 140 controls the communication unit 11 to select any one of the servers 2 according to user's input and to receive contents from the selected server 2. The controller 14 may include a nonvolatile memory which stores a control program enabling such a control operation, a volatile memory which at least part of the stored control program is loaded to, and a microprocessor executing the loaded control program, which are not shown in FIG. 2.

The client device 1 may further include a storage unit 15 including a nonvolatile memory which stores information 151 about order of priority of the servers 2.

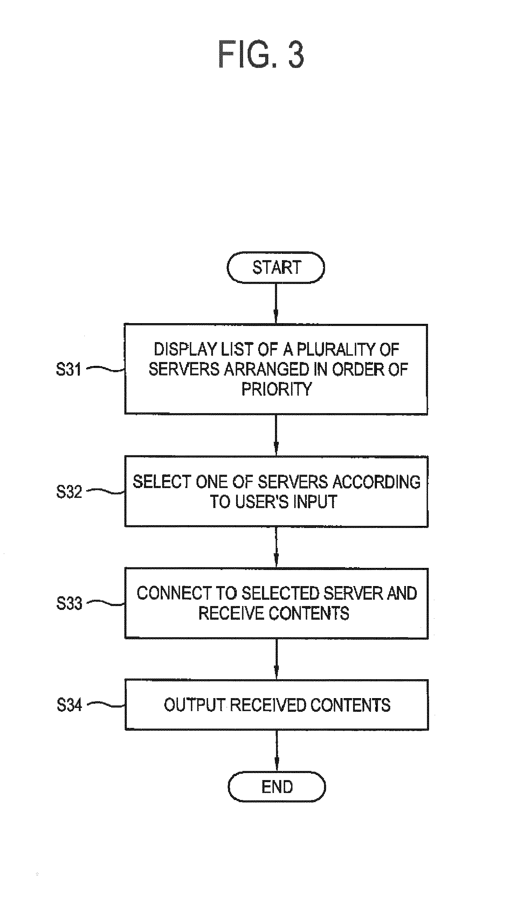

FIG. 3 is a flowchart illustrating a control method of the client device 1, to connect to one of a plurality of connectable servers 2 when the client device 1 is connected to a server 2 for the first time, such as when power is turned on.

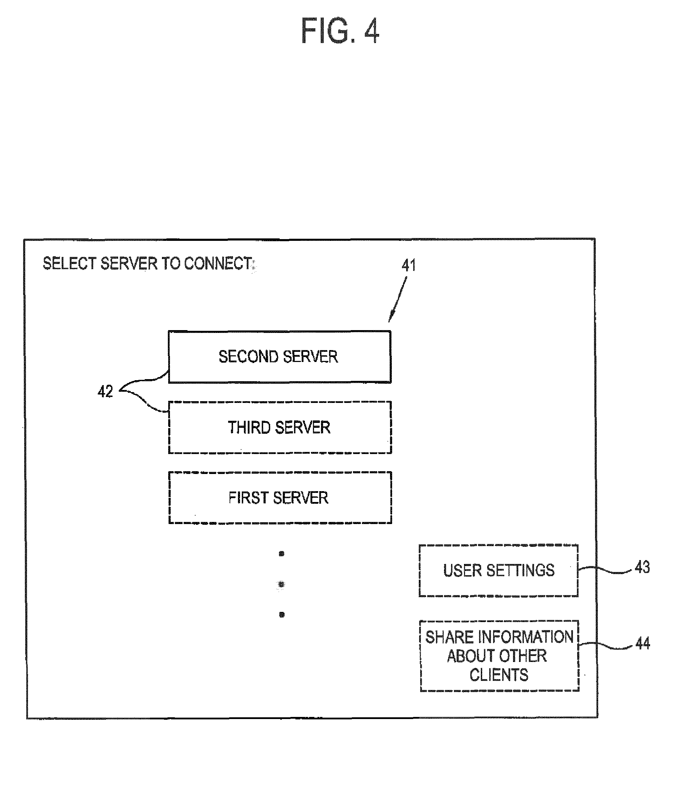

In operation S31, the client device 1 displays a list of a plurality of servers 2 arranged according to order of priority. The client device 1 may transmit the list to the display apparatus 4 and display the list on the display apparatus 4. FIG. 4 shows an illustrative example of the list of the plurality of servers 2 arranged in order of priority. The list 41 may include items 42 representing the servers 2, respectively. In the list 41, the servers 2 are arranged in order of priority from top to bottom. For example, a second server has a top priority, a third server has a next lower priority, and a first server has a following lower priority.

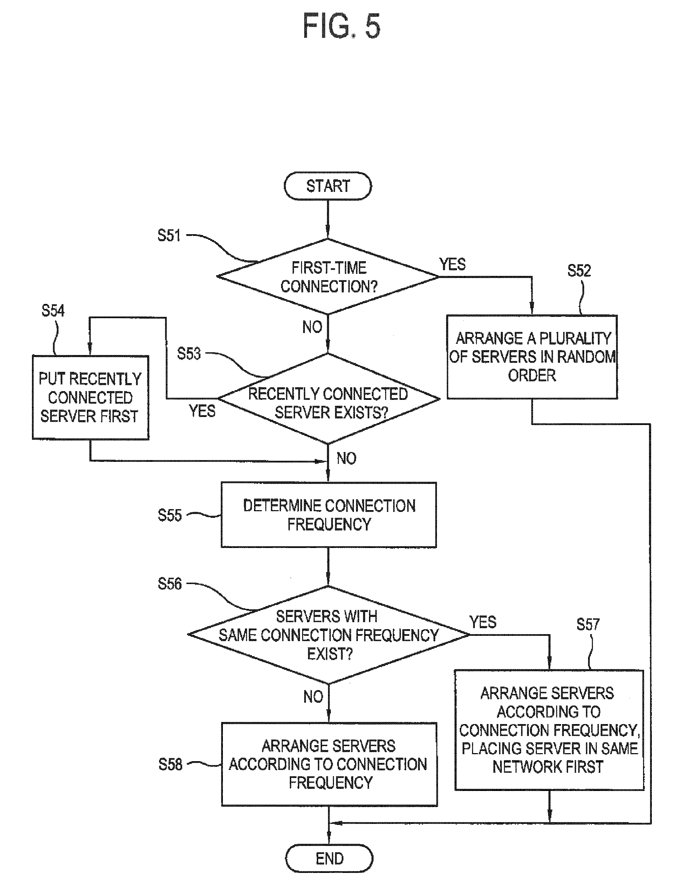

The order of priority of the servers 2 may be determined based on whether the servers 2 are recently connected, the frequency of connection, whether the servers 2 are in the same network, and the like. FIG. 5 is a flowchart showing an illustrative example of an operation of the client device 1 determining order of priority.

Referring to FIG. 5, in operation S51, the client device 1 determines whether the client device 1 is connected to a server 2 for the first time. If connection happens for the first time, the client device 1 arranges a plurality of connectable servers 2 in random order in operation S52.

If it is not the first time that connection happens, the client device 1 determines whether there is a server 2 recently connected. If there is no server 2 recently connected, the client device 1 determines the frequency of connection in operation S55.

If there is a recently connected server 2, the client device 1 assigns a top priority to this server and puts the recently connected server 2 first in the list, in operation S54 and determines the frequency of connection of other servers, in operation S55.

Next, in operation S56, the client device 1 determines whether there are two or more servers 2 with the same connection frequency. If there are no servers 2 with the same connection frequency, the client device 1 arranges the servers 2 in order of connection frequency in operation S58.

If there are two or more servers 2 with the same connection frequency, the client 1 arranges the two or more servers 2 with the same connection frequency such that a server 2 in the same network as the client device 1 is put first in the list and arranges the remaining servers 2 in order of connection frequency, in the operation S57.

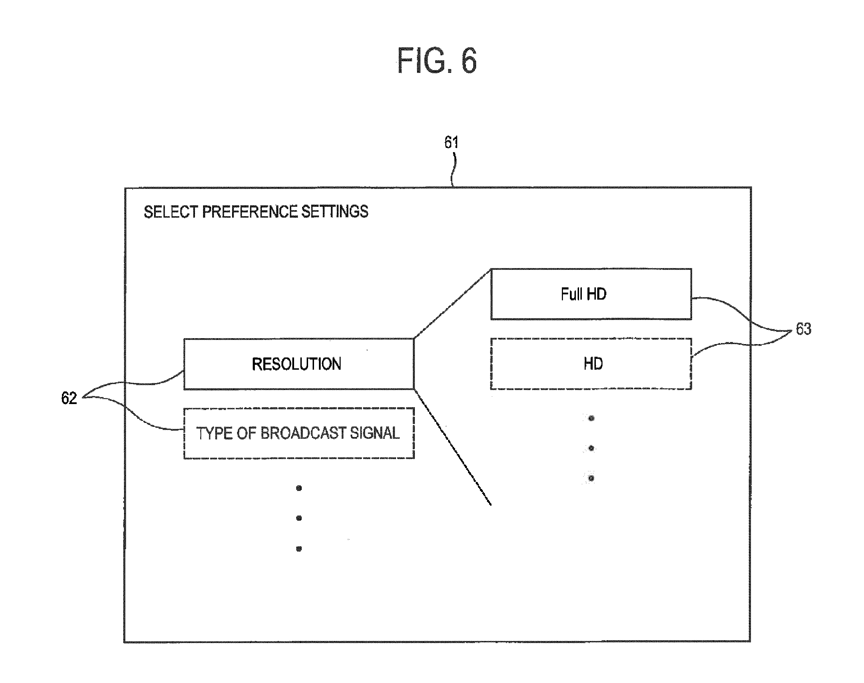

Alternatively, the order of priority of the servers 2 may be further determined based on at least one of the quality of contents preset by the user, resolution, and the kind of a medium providing contents. As shown in FIG. 4, the client device 1 may display an item 43 about user settings along with the list 41. When the user selects the item 43, the client device 1 may display a UI for user settings. FIG. 6 shows an illustrative example of a UI for user settings. The UI 61 includes items 62 and 63 about the quality of contents, resolution, and the kind of a broadcast signal. The user may select a desired item among the items 62 and 63. The client device 1 may determine the order of priority of the servers 2 based on the selected item 62 or 63 by the user. For example, when the user selects "Full HD" 63 in "resolution" 62, the client device 1 assigns higher priority to the servers 2 capable of supporting the contents having Full HD resolution and puts them higher on the list.

Referring back to FIG. 3, the client device 1 selects any one of the servers 2 according to user's input in operation S32. The client device 1 may highlight any one of the items 42 of the servers 2 on the list 41 so that the user selects a server 2 and may change the highlight according to user's input. When displaying the list 41, the client device 1 highlights an item placed first among the items 42 of the servers 2 on the list 41, enabling the user to select the corresponding server 2 immediately. Alternatively, when there is no input by the user within a predetermined period of time after displaying the list 41, the client device 1 may select a server 2 which has a top priority among the servers 2.

Next, the client device 1 performs connection to the server 2 selected by the user among the servers 2 or to the server 2 with a top priority, in operation S33. When connected to the server 2, the client device 1 receives contents from the server 2.

Then, the client device 1 outputs the contents received from the server 2 to the display apparatus 4 in operation S34.

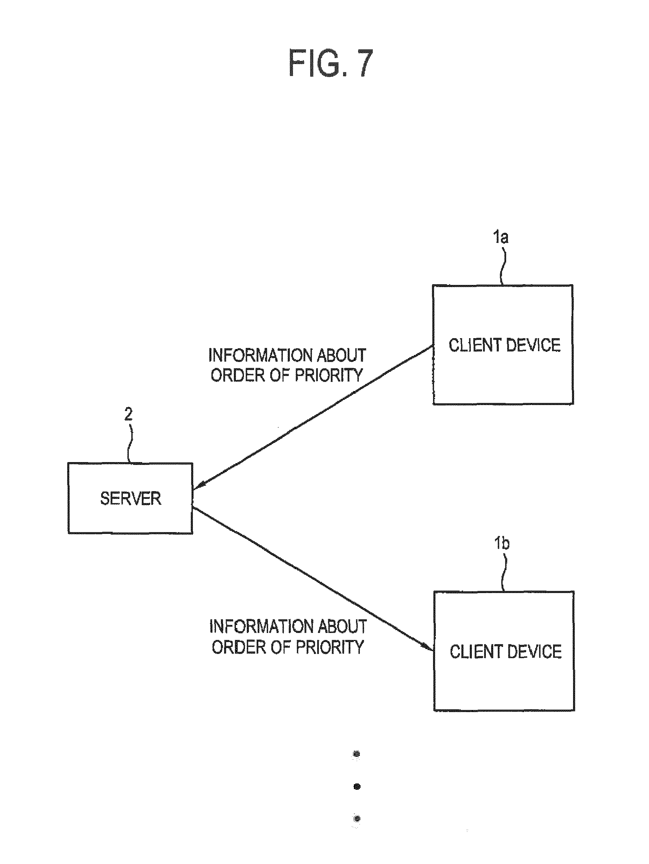

FIG. 7 illustrates a client device and a server according to an exemplary embodiment. In the present exemplary embodiment, a plurality of client devices 1a, 1b are connected to a server 2. The client devices 1a, 1b may share information about order of priority of the server 2 with each other. For example, when a client device 1a transmits stored information about order of priority to the server 2, the server 2 transmits the information about the order of priority to a client device 1b. Transmission of the information about the order of priority may be carried out by the client devices 1a, 1b automatically or by an instruction of the user.

Then, when the client device 1b is to be connected to the server 2 again, the client device 1b may determine order of priority of the server 2 using the information of the client device 1a about the order of priority. As shown in FIG. 4, the client device 1b may display an item 44 about sharing information about order of priority of other client devices along with the list 41. When the user selects the item 44, the client device 1b may display a UI for sharing the information about the order of priority of other client devices.

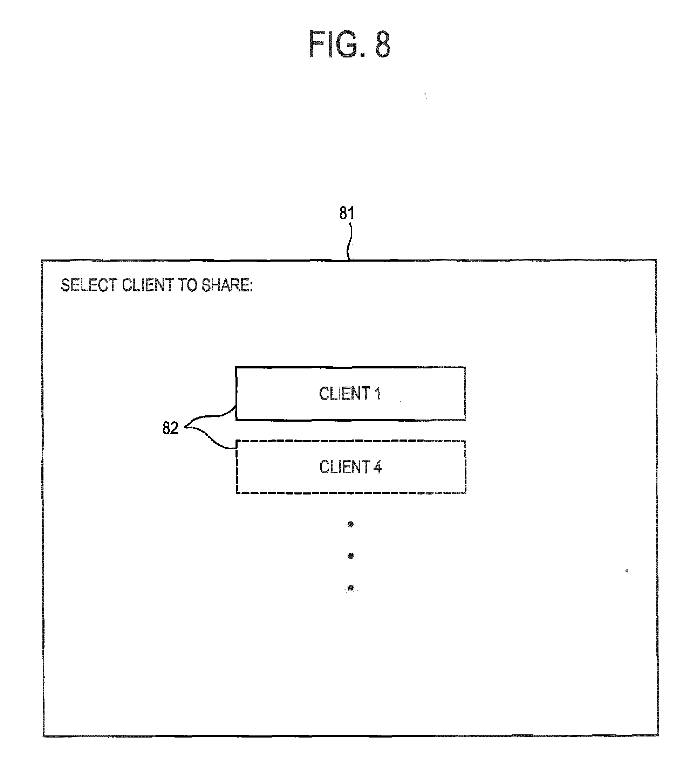

FIG. 8 shows an illustrative example of a UI for sharing information about order of priority of other client devices. The UI 81 includes an item 82 of other client devices which allow information about order of priority to be shared. The user may select any one client device which allows sharing on the item 82. The client device 1b may determine order of priority of connectable servers 2 based on information about order of priority of the client device selected by the user. Accordingly, for example, when the user moves from a room of the client device 1a to another room of the client device 1b, the user may utilize the same desired order of priority of servers in the client device 1b.

As described above, a client device according to one or more exemplary embodiments may be connected to any one of a plurality of servers in consideration of user's convenience.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A client device comprising:
a communication unit connectable to at least one of a plurality of servers providing contents;
an output unit which outputs the contents provided from the servers;
an input reception unit which receives input from a user; and
a controller which is configured to control displaying a list of the servers arranged in an order of priority, select one of the servers according to the input received by the input reception unit, and control receiving the contents from a selected server.

2. The client device of claim 1, wherein the controller determines the order of priority based on whether the servers have been recently connected.

3. The client device of claim 1 or 2, wherein the controller determines the order of priority based on a connection frequency of the servers.

4. The client device of one of claims 1 to 3, wherein the controller determines the order of priority based on whether the servers and the client device belong to the same network.

5. The client device of one of claims 1 to 4, wherein the controller determines the order of priority based on at least one of a quality of the contents preset by the user, resolution, and a kind of a medium providing the contents.

6. The client device of one of claims 1 to 5, wherein the controller selects a server which has a top priority among the servers when there is no input by the user within a predetermined period of time during a display of the list.

7. The client device of one of claims 1 to 6, wherein the controller transmits information about the order of priority to the servers.

8. The client device of one of claims 1 to 7, wherein the controller receives information about the order of priority of another client device from any one of the servers, and
displays the list based on the received information about the order of priority in a reconnection event.

9. A control method of a client device, the control method comprising:
displaying a list of servers providing contents arranged in an order of priority;
selecting one of the servers according to an input from a user;
connecting to a selected server and receiving the contents from the selected server; and
outputting the contents received from the selected server.

10. The control method of claim 9, further comprising determining the order of priority based on whether the servers have been recently connected, prior to the displaying.

11. The control method of claim 9 or 10, further comprising:
determining the order of priority based on connection frequencies of the servers, prior to the displaying; and
assigning priorities to the servers based the connection frequencies, in an order from a highest connection frequency to a lowest connection frequency.

12. The control method of one of claims 9 to 11, further comprising:
determining the order of priority based on whether the servers and the client device belong to a same network, prior to the displaying; and
assigning a higher priority to the server of the same network.

13. The control method of one of claims 9 to 12, further comprising determining the order of priority based on at least one of a quality of the contents preset by the user, resolution, and a kind of a medium providing the contents, prior to the displaying.

14. The control method of one of claims 9 to 13, further comprising transmitting information about the order of priority to the servers.

15. The control method of one of claims 9 to 14, further comprising receiving information about the order of priority of another client device from any one of the servers,
wherein the displaying comprises displaying the list based on the received information about the order of priority in a reconnection event.
